# EUROPEAN PATENT SPECIFICATION

(11) **EP 2 355 534 B1**
(45) Date of publication and mention of the grant of the patent: **03.04.2013**
(21) Application number: 11152718.0
(22) Date of filing: 31.01.2011
(51) Int. Cl.: H04N 17/04

(54) **A method for automated video scaling and alignment testing**
Verfahren zur automatischen Prüfung von Videoskalierung und Ausrichtung
Méthode de test de mise ä l'échelle et d'alignement d'un signal video

(30) Priority: 05.02.2010 TR 201000895
(43) Date of publication of application: 10.08.2011
(73) Proprietor: Vestel Elektronik Sanayi ve Ticaret A.S., 45030 Manisa (TR)
(72) Inventor: Onder, Devrim, 45030, Manisa (TR)
(74) Representative: Cayli, Hülya

(56) References cited:
- EP-A1- 0 448 480
- GB-A- 2 233 866
- US-A1- 2005 179 825

## Description

### Technical Field

Present invention relates to automated methods for testing display devices, particularly to an automated method for DTG MHEG scaling and alignment tests.

### Prior Art

A display device which is in compliance with DVB-T (Digital Video Broadcasting-Terrestrial) standards must pass all the tests in the relative testing set so that the device can obtain a DTG MHEG certificate. Custom video scaling and video alignment tests are part of this testing set.

Video scaling and alignment tests are performed manually by the testers. The test application in question is performed by receiving satellite broadcasting data from testing set, transmitting the data to the products to be tested, and following the test instructions one by one.

The tester communicates with the testing system via a remote control device. For each testing step, required key combinations are transmitted to the product and the appearing screen is analyzed after each entry transmitted to the product. The tester checks whether the display appears properly or not, and further checks whether one or more targets which have been created by the testing system match with the targets on the video or not.

The sole drawback of this manual test application is loss of time. Confirmation (testing) of each product takes a long time since there are several steps to be applied. Furthermore, said method requires continuous intervention by the tester, due to which the test results may vary; and repeating the test at desired time and frequency raises difficulties, and performing programmed tests, e.g. night tests, is impossible.

Various studies in the field of automated video scaling and alignment testing have been conducted in order to eliminate such drawbacks. However, many of said test groups, including the ones intended for video positioning and alignment cannot be automated owing to technical reasons. The usual practice in these tests is drawing targets on the display that is being watched and checking whether the positions of these targets match with the custom targets on the video or not. Test automation systems usually employ image comparison process; however, continuous change of background video disables the comparison function of the test systems so this function cannot be used for said tests. Furthermore, comparison function is disabled since the target positions employed in said tests are entered with some tolerance values.

The patent document No EP 0448480 discloses a projection display device with negative feedback loop to correct all the faults of the projected image. It is a video projection display device for projecting video images on a screen in order to detect and correct the faults in the projected video images. It uses a negative feedback loop for detection and correction of the faults such as spatial, colorimetric and brilliance characteristic of the projected image and an image retaking device for complete retaking of a test image, only once or by zones. The analysis of the retaken, projected test image is used for to determine the corrections and adapted circuits apply the corrections to be made to the control circuits of the projection tubes via correction signals. The analysis, a measurement of time or amplitude differences between the signals, is being made by an analysis device by means of a comparator. This device is mechanically complex and expensive for producing.

The patent document No US 2005/0179825 discloses an automatic image convergence for projection television systems. It is a method for automatic geometric alignment of a CRT projection system. It includes a screen of CRT projection system; said system includes a Fresnel lens. The working principle of the systems is the principle known as "reflection of the light", and working method of the system is reflecting back a portion of the light from the first image off of Fresnel lens, identifying the boundaries of the screen, calculating optimum locations relative to the boundaries, displaying a second image pattern, replacing second image pattern to a first optimum location, reporting the actual location of the second image pattern, comparing the actual location of the second image pattern with the first optimum location and aligning the second image pattern with the first optimum location.

### Objective of the Invention

The aim of the invention is to provide an automated method for video scaling and alignment testing in order to offer solutions to the above mentioned drawbacks.

### Brief Description of Drawings

Figure 1 is an exemplary view of the target, in the form of a cross, drawn by the test application.
Figure 2 is an exemplary view of the target on the video.
Figure 3 is an exemplary view of the test screen comprising a full screen frame.
Figure 4 is an exemplary view of the test applied on the frame located in a region of the screen.

The corresponding meanings of the reference numbers in the drawings are as follows.
Test screen (1)
Frame captured from live video (2).

### Disclosure of the Invention

The method of the invention offers a solution which ensures automation of various video scaling and alignment which are manually performed in the prior art.

The present method is based on image recognition and image comparison that are applied on a captured test display and merely needs a captured frame. Said image recognition and image comparison are performed with a single frame captured from a live video at a specific time. The applied image recognition and image comparison processes are performed, independently from the video content of the frame, by focusing on the targets on the display only. Gray targets that are present on the display tested and green targets drawn by the test application are detected and their positions are compared. It is determined, according to the comparison made, whether video is correctly positioned or not, and whether the video is scaled with a proper ratio or not.

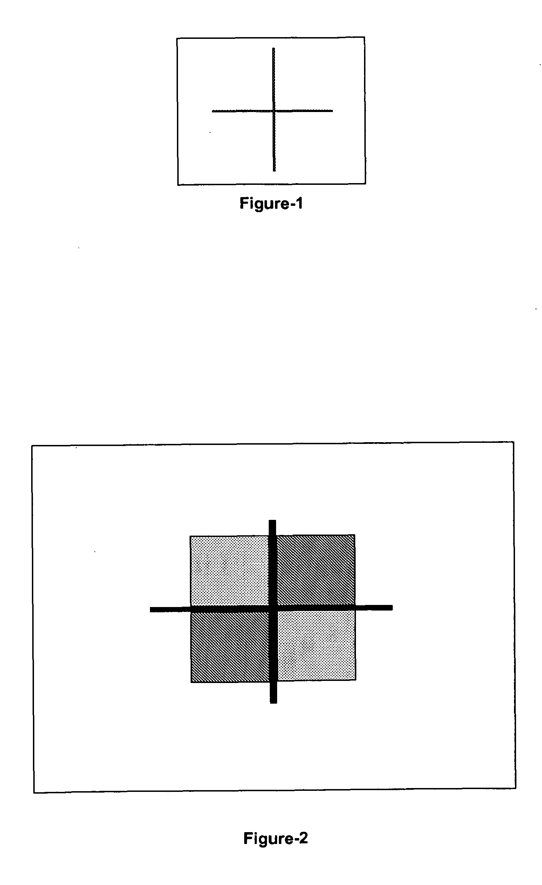

In the first step of the method of the invention, the test application draws the green targets, which are in the form a cross, on the display. Figure 1 shows an exemplary view of said target created by the test application.

There are gray colored targets on the video that is used for testing the display device. The test application draws green cross targets over these gray targets. Figure 2 shows gray target, and cross target over the gray one. User should see that these two targets are overlapping. This means proper video scaling and positioning have been performed. In this case, the product passes the test, and fails otherwise.

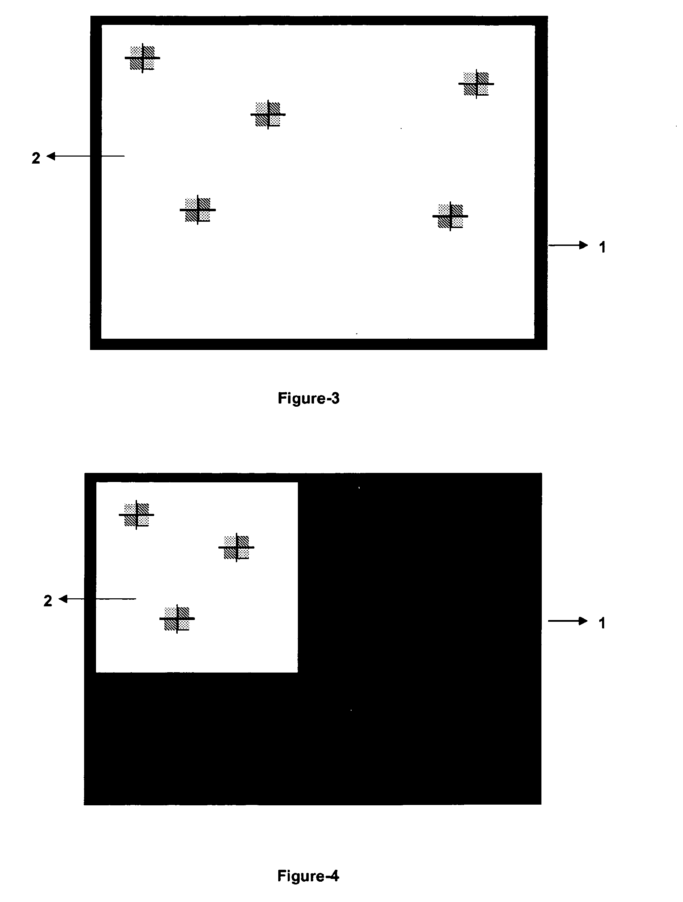

The snapshot shown in Figure 3 comprises an exemplary view of the test screen (1). The frame captured from a live video (2) is included here and this live video contains five different gray targets. The test application draws five different green targets over this screen. These overlap with the gray targets. Therefore, the tester, looking at said display, can be of the opinion that the device passes the test.

The processes disclosed until now have been similar with the steps of the manually performed test methods. The method of the invention additionally involves the below mentioned steps:
- Determining width (resolution) of live video,
- Detecting cross (green) targets within the video width,
- Detecting gray targets that match with each cross target in the previous step,
- Comparing positions of gray targets and cross targets.

These steps are disclosed in detail below:

### Determining video width:

Video width is determined at first. Video width is defined as the least square that contains the whole video. In some test scenes, video may cover the whole screen; on the other hand, video may be present in any region, as in Figure 4, in some test scenes depending on scaling and positioning. The method focuses only on the targets which are present on the region covered by the video width, thus ensuring more reliable test results.

### Detecting green cross targets:

The method detects targets in the form of green crosses. All of the green cross targets (within the video width) on the test display are detected in this step.

Pixels in the captured display which contain intense green colored content are separated by color thresholding. For said thresholding process, the display is converted from RGB (red, green and blue) to YCbCr structure. This conversion is a standard digital conversion. The display components within YCbCr structure are thresholded by using illumination and color chrominance level values which have been experimentally predetermined. Pixels which exceed the threshold are marked as candidate pixels and are evaluated in the next step. A modified Hough Transform is applied to this thresholded display.

### Modified Hough Transform:

The method applies a custom Hough Transform for the green pixels from the previous step only. Hough Transform is a useful method for detecting objects having certain shapes (circular, square, elliptical etc.) in a display. The modified method focuses on searching line segments (in the form of cross) perpendicular to each other and having limited length.

For each green pixel detected in the previous step, a saliency value is generated. Said saliency value is generated as follows: the right and left pixels (within a predetermined distance range) of the green pixel (Y) which is being evaluated are visited and are increased as much as the number of detected green pixels which are around the saliency value of the pixel (Y) which is being evaluated. The same procedure is performed for upper and lower pixels. Thus, saliency value for each analyzed pixel is obtained.

Two dimensional saliency values that have been determined for each analyzed green pixel will be comparatively higher at centre of the green crosses. Centers of green cross targets are detected by grouping and centering of these local maximums.

### Detecting Gray Targets:

The method performs detection of gray targets in this step. For each cross target detected in the previous step, corresponding gray target is determined. The display that has been converted to YCbCr structure is employed for determination of said gray targets. Regions that have the same characteristics of the gray targets are scanned around a certain distance from the determined center point of each detected green target. The presence of gray leveled, light colored and dark colored squares symmetrical with respect to the center point which is determined based on the determined center point of said green target in the form of cross is searched. The method visits the center pixel of a green cross target and applies a mean square error (MSE) calculation between display values and gray target template. If gray leveled, light colored and dark colored squares, which meet an experimentally predetermined MSE error threshold, are present around the green target as a result of this search, the gray target is detected. This error value will be high in the case that no gray target is present in the region where MSE is applied; and the error value will be low if there is one gray target that exactly matches with said green target. In the case that MSE is lower than an experimental threshold value, a gray target template is present in said region and the center thereof is overlapping with the center of the green target. It should be noted hat there may not be any gray targets. This means failure in the test.

### Comparison:

In the case that a pair of green cross and gray target template is detected and that target positions are overlapped, there is no problem related to these targets. The same control is applied to all green cross targets. It is concluded that the system passes the test if all the green targets are related to a gray target.

However, the position of a gray target template may not overlap with a green cross target. This necessarily causes failure in the test.

The method can be applied to full-automated or semi-automated testing systems, custom video scaling and alignment tests. A minor adaptation enables the target to be applied to any other comparison-related video test.

The present method offers a new algorithm which ensures automation of video scaling and positioning tests characterized by UK DTG MHEG tests.

The present method significantly simplifies the test since it is independent from video content of any frame and it does not require user intervention, thus offering rapid and precise results. The method can be easily integrated into any automated testing system since no template displays, masks or user intervention is needed.

## Claims

1. A testing method of display devices comprising automation of video scaling and alignment for UK DTG MHEG test **characterized in that** it comprises the steps of
- capturing a single frame from a live video at a certain time;
- determining width of said video;
- drawing green targets, which are in the form of crosses, on the display within said video width;
- detecting said green targets;
- detecting gray targets by using UK DTG MHEG test signals, in said frame, which overlap with the detected green cross targets;
- comparing positions of the detected green cross targets and the detected gray targets to determine whether the video is correctly positioned or not, and whether the video is scaled with a proper ratio or not.

2. A method according to Claim 1 **characterized in that** green colored pixels in said captured frame are separated by thresholding in order to detect said green cross targets.

3. A method according to Claim 2 **characterized in that** modified Hough Transform is applied to the pixels that are separated by thresholding.

4. A method according to Claim 3 **characterized in that** saliency values of the separated pixels are created.

5. A method according to Claim 1 **characterized in that** said gray target is detected by MSE calculation.

## Patentansprüche

1. Ein Testverfahren für Anzeigevorrichtungen, aufweisend eine Automatisierung von Videoskalierung und -anpassung für einen UK DTG MHEG Test, **dadurch gekennzeichnet, dass** es die Schritte aufweist:
- Erfassen eines einzelnen Einzelbildes aus einem Live-Video zu einer bestimmten Zeit;
- Feststellen der Breite des Videos;
- Zeichnen grüner Ziele, welche die Form von Kreuzen haben, auf der Anzeige innerhalb der Videobreite;
- Erkennen der grünen Ziele;
- Erkennen grauer Ziele durch Nutzung von UK DTG MHEG Testsignalen im Einzelbild, welche sich mit den erfassten grünen Kreuz-Zielen überschneiden;
- Vergleich der Positionen der erfassten grünen Kreuz-Ziele und der erfassten grauen Ziele, um festzustellen, ob das Video korrekt positioniert ist oder nicht, und ob das Video im richtigen Verhältnis skaliert ist oder nicht.

2. Verfahren nach Anspruch 1, **dadurch gekennzeichnet, dass** grün gefärbte Pixel im erfassten Einzelbild getrennt werden durch Schwellwertbildung (thresholding), um die grünen Kreuz-Ziele zu erkennen.

3. Verfahren nach Anspruch 2, **dadurch gekennzeichnet, dass** auf die Pixel, welche durch Schwellwertbildung (thresholding) getrennt werden, eine modifizierte Hough Transformation angewandt wird.

4. Verfahren nach Anspruch 3, **dadurch gekennzeichnet, dass** Ausstandswerte (saliency values) der getrennten Pixel generiert werden.

5. Verfahren nach Anspruch 1, **dadurch gekennzeichnet, dass** das graue Ziel durch MSE Berechnung erkannt wird.

## Revendications

1. Procédé d'essai de dispositifs d'affichage comprenant l'automatisation de mise à l'échelle et d'alignement vidéo pour un essai UK DTG MHEG **caractérisé en ce qu'**il comprend les étapes consistant à
- capturer une trame unique d'une vidéo en temps réel à un certain moment ;
- déterminer la largeur de ladite vidéo ;
- dessiner des cibles vertes, qui sont sous forme de croix, sur l'afficheur au sein de ladite largeur de vidéo ;
- détecter lesdites cibles vertes ;
- détecter des cibles grises à l'aide de signaux d'essai UK DTG MHEG, dans ladite trame, qui se chevauchent avec les cibles en croix vertes détectées ;
- comparer les positions des cibles en croix vertes détectées et des cibles grises détectées pour déterminer si la vidéo est positionnée correctement ou non, et si la vidéo est mise à l'échelle avec un rapport correct ou non.

2. Procédé selon la revendication 1, **caractérisé en ce que** des pixels de couleur verte dans ladite trame capturée sont séparés par seuillage afin de détecter lesdites cibles en croix vertes.

3. Procédé selon la revendication 2, **caractérisé en ce qu'**une transformée de Hough modifiée est appliquée aux pixels qui sont séparés par seuillage.

4. Procédé selon la revendication 3, **caractérisé en ce que** des valeurs de relief des pixels séparés sont créées.

5. Procédé selon la revendication 1, **caractérisé en ce que** ladite cible grise est détectée par calcul d'erreur quadratique moyenne.
